# EUROPEAN PATENT SPECIFICATION

(11) **EP 1 879 101 B1**
(45) Date of publication and mention of the grant of the patent: **07.04.2010**
(21) Application number: 06116947.0
(22) Date of filing: 11.07.2006
(51) Int. Cl.: G06F 5/14

(54) **A method and system for controlling data synchronization in FIFO memories, and related synchronizer**
Verfahren und System zur Steuerung von Datensynchronisation in FIFO-Speichern und zugehöriger Synchronisierer
Procédé et système de contrôle de la synchronisation des données dans des mémoires FIFO

(43) Date of publication of application: 16.01.2008
(73) Proprietor: STMicroelectronics Srl, 20041 Agrate Brianza (MB) (IT)
(72) Inventor: Condorelli, Riccardo, 95030 Tremestieri Etneo (Catania) (IT); Auditore, Giovanni, 95018 Riposto (Catania) (IT)
(74) Representative: Bosotti, Luciano

(56) References cited:
- US-A- 5 084 841
- US-A- 5 345 419
- US-A- 5 491 659
- US-B1- 6 263 410
- US-B1- 6 857 043

## Description

### Field of the invention

The present invention relates to techniques for controlling data synchronization in FIFO (First-In First-Out) memories.

The invention was developed with specific attention paid to its possible use in FIFO memories having two separate interfaces, one to insert data (write interface) and the other one to extract data (read interface) running in general at different clock frequencies.

### Description of the related art

In digital logic circuits, FIFO memories are often used to exchange data, commands or any other kind of information between two asynchronous clock domains.

Usually, FIFO memories have two separate interfaces: the first one is used for inserting data (write interface) and the other one for extracting data (read interface). In general, these interfaces run at different clock frequencies. Preferably, each interface is composed of an address bus and a data bus, plus additional control signals such as an enable signal used to activate the related read or write operation.

In such systems two pointers, usually implemented using registers, are present:
- a write pointer in the write clock domain points to the first location available to accept new data, and
- a read pointer in the read clock domain points to the first element of the FIFO containing valid data.

The FIFO is often addressed in a circular way by means of pointers that advance from the current address location to the next memory location "wrapping" to the first memory address location when the current address location is the last FIFO memory location.

The current FIFO status can easily be derived from a comparison of these two pointers. The FIFO is considered "EMPTY" when the write pointer and the read pointer point to the same FIFO location (i.e. both have the same value). When the write pointer points to the memory location immediately preceding the read pointer and new data is inserted, the insertion of data will cause the write pointer to be incremented and get the same value as the read pointer: the FIFO will thus be "FULL", but this condition is - per se - identical to the one used to identify the "EMPTY" status, therefore an extra flag must be used to distinguish between the "EMPTY" and "FULL" FIFO status.

The main issue to address in such systems is the difficulty to compare two multi-bit values across the two clock-domain boundaries. Due to different "slacks" of the different signals comprising the value to be compared, a change in the source clock domain can be wrongly sampled in the destination clock domain, leading to a wrong comparison.

Various solutions exist in the prior art to address this meta-stability problem. Some of these make use of a synchronization mechanism based on pointers coded with the Gray-Coding scheme and/or counters resynchronized across the two clock domains and used to track the FIFO status such as "FIFO_FULL", "FIFO_EMPTY", "ALMOST_FULL", and "ALMOST_EMPTY".

One of the main advantages of the Gray-code is that a Gray-code counter always advances with one bit change, and therefore the value sampled in the destination clock domain can only be the preceding value or the current source value. Both values are in any case valid and do not compromise the correct behavior of the system.

Additionally, this property of Gray-code based counters to increment or decrement only by a single bit change reduces the switching activity and therefore the dynamic power consumption.

However, in order to "wrap" from the last Gray-coded value of a given sequence to the first one, preserving the property to have only one bit change, the number of elements of the Gray-sequence must be even. Current implementations of Gray-code based data synchronization systems for FIFO memories have been therefore based so far on an even number of FIFO locations.

To overcome this limitation, other solutions abandoned the use of Gray-code moving towards different coding scheme. This often entails an increase in the number of bits required to encode a given number of memory locations with respect to the one obtained using the Gray-code.

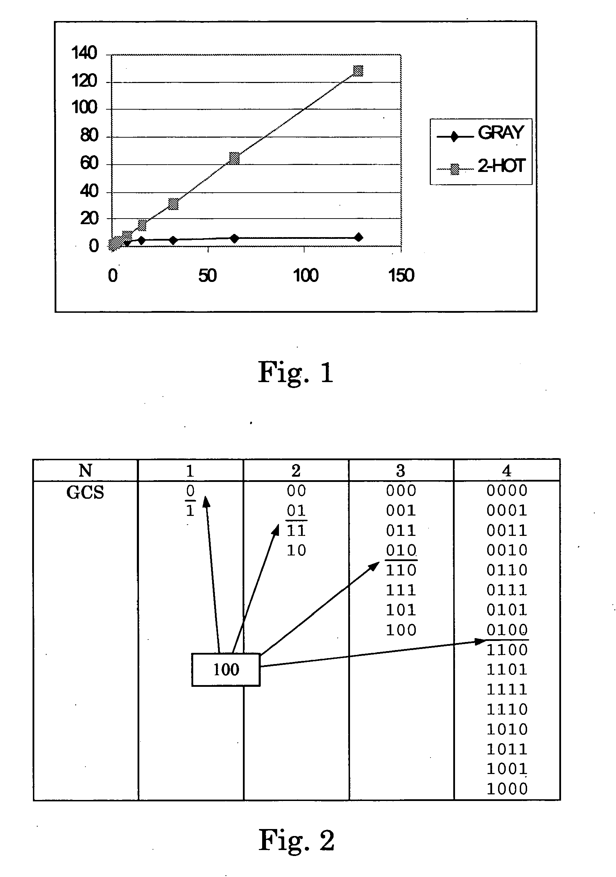

As an example, a "TWO-HOT" encoding requires N bits to encode each pointer of a FIFO having N memory locations with N being any positive integer, while the same system using Gray-code pointers would only require a number of bits equal to (log₂N, i.e. the basis-2 logarithm of N) rounded to the next valid integer value. Figure 1 shows a comparison of bit consumption in the TWO-HOT bit encoding and the Gray-code.

More specifically, the present invention relates to a method of detecting the status of a FIFO memory during write/read operations according to the preamble of Claim 1, which is known, e.g. from US-A-5 491 659. Document US-A-5 084 841 is also of interest for the instant invention.

### Object and summary of the invention

The object of the present invention is to provide an improved arrangement for applying Gray-coding techniques in a more efficient manner to the control of FIFO memories of any size.

According to the present invention, that object is achieved by means of a method having the features set forth in the claims that follow. The invention relates also to a corresponding system (i.e. a FIFO memory device) and to a digital logic circuit (essentially a synchronizer) where the FIFO memory is used to allow data exchange between two asynchronous clock domains.

The claims are an integral part of the disclosure of the invention provided herein.

Preferred embodiments of the arrangement described herein may take the form of a FIFO memory implemented either as a hardware FIFO implemented by using a memory array (such as e.g. a RAM) or as a "soft" FIFO implemented using flip-flops.

Preferably, in the first type of FIFO memory the Gray-code is used only to generate the "FULL" and/or "EMPTY" flags while the read and write memory pointers are implemented by two different counters (one for each clock domain).

Instead, for the second type of FIFO memory the Gray-code could be used for both generating the read and write memory pointers and implementing the "FULL" and/or "EMPTY" flags. The second solution is preferable for a small FIFO memory size.

In both cases the FIFO can have any number of lines of memories (either odd or even numbers).

In a preferred embodiment, the invention uses three Gray-code counters for generating the "FULL" and/or "EMPTY" flags for both hard and soft FIFO memories.

For instance, in a FIFO memory with N elements, the three Gray-code counters may have a bit size of log₂(2*N)=(log₂N)+1 (once again rounded to the next integer). Each counter will count 2*N values and then will wrap to its initial state. Being this number even for any positive integer N, it can be encoded with a set of Gray-code symbols that can wrap respecting the principle of having only one bit changing between one value and the next one.

Preferably, two of the three Gray-code counters will be initialized to the same initial Gray-code symbol value corresponding to position J (any of the 2*N symbols can be chosen as starting point); instead, the third Gray counter will be initialized to the symbol value corresponding to position J+N.

In such an exemplary embodiment, the first Gray-code counter will lie in the read clock domain and will be referred to in the following as "read_gray_counter", while the second counter will lie in the write clock domain and will be referred to as the "write_gray_counter". The third counter can be placed either in the read clock domain and named "shifted_read_gray_counter" or in the write clock domain and named "shifted_write_gray_counter", as will be explained in the following. The two solutions give rise to a dual implementation of the same underlying principle.

In such an exemplary embodiment, the read_gray_counter is incremented after each read operation, and the write_gray_counter is incremented after each write operation. The third counter is incremented either on read operation if the counter is placed in the read clock domain (shifted_read_gray_counter) or on write operation if counter is placed in the write clock domain (shifted_write_gray_counter).

Preferably, the FIFO "EMPTY" status is obtained in the read clock domain when the read_gray_counter value is equal to the synchronized write_gray_counter value in the same domain.

The FIFO FULL status can be obtained in the write clock domain either when the shifted_write_gray_counter value is equal to the synchronized read_gray_counter value or when the write_gray_counter value is equal to the synchronized shifted read gray counter value.

Regardless of the solution chosen, in order to detect the FIFO "FULL" and/or "EMPTY" condition only two out of the three Gray-code counters must be synchronized and made visible to the other clock domain. In any case, it is possible to detect the "FULL" status without the third Gray-code counter for example for FIFO memories with limited size by substituting the third Gray-code counter by e.g. a shifter and two 1-hot encoders. The shifter might operate an N bit shift-left operation with wrapping on the 1-hot encoded value of the write gray counter. If this value is equal to the 1-hot encoded value of the synchronized read gray counter value in the write clock domain, in this case the FIFO memory can be considered as "FULL".

The preferred choice of addressing the FIFO memory, as described in the foregoing, depends mainly on the FIFO type. For example, for hard FIFO memories it is preferable to have separate write and read pointer counters that will maintain the current write/read address location inside the memory.

For soft FIFO memories it is possible to directly decode the 2*N Gray-coded symbols to N physical FIFO memory selections. In this way, the symbol at position J and the symbol at position (J+N) will point to the same FIFO memory location. This second option avoids the third counters, but requires an additional complex decoding logic, which is only suitable for small FIFO memories.

### Brief description of the annexed representations

The invention will now be described, by way of example only, by referring to the enclosed representations, wherein:
- figure 1, already discussed in the foregoing, is a chart showing the different bit consumptions of Gray-coding and TWO-HOT encoding,
- figure 2 shows a table of the Full-Gray-Code,
- figure 3 shows a table containing the Gray-Coded symbols associated to certain FIFO memory dimension,
- figure 4 is a block diagram illustrating an example (not according to the invention) of a hard FIFO memory using a shifted write Gray-code counter,
- figure 5 is a block diagram illustrating an example (not according to the invention) of a hard FIFO memory using a shifted read Gray-code counter,
- figure 6 is a block diagram illustrating an embodiment of a soft FIFO memory using a shifted write Gray-code counter,
- figure 7 is a block diagram illustrating an alternative embodiment of a soft FIFO memory using a shifted read Gray-code counter, and
- figure 8 is a block diagram illustrating an embodiment of a soft FIFO memory using a 1-hot encoder and a shifter.

In order to improve comprehensibility of the figures, the same numbers will be maintained for the same functional blocks in subsequent figures.

### Detailed description of exemplary embodiments of the invention

The arrangement described herein is based on the usage of a Gray-code, which includes 2*N symbols for a FIFO memory having either an odd or an even number of FIFO memory lines N. Preferably, this Gray-code is obtained by a standard full Gray-code of log₂(2*N) bits as can be seen in Figure 2.

In a preferred embodiment, the full Gray-coded symbols are obtained from the immediately preceding Gray-coded symbols (i.e. having N-1 bits) mirroring all values at a "Mirror line" (100) and then adding a column of zeros on the left for the original set of symbols and a column of ones for the mirrored symbols.

In figure 2 a table is shown containing the Gray-coded symbols GCS for 1,2,3 and 4 bits, including also the respective "Mirror Lines" 100.

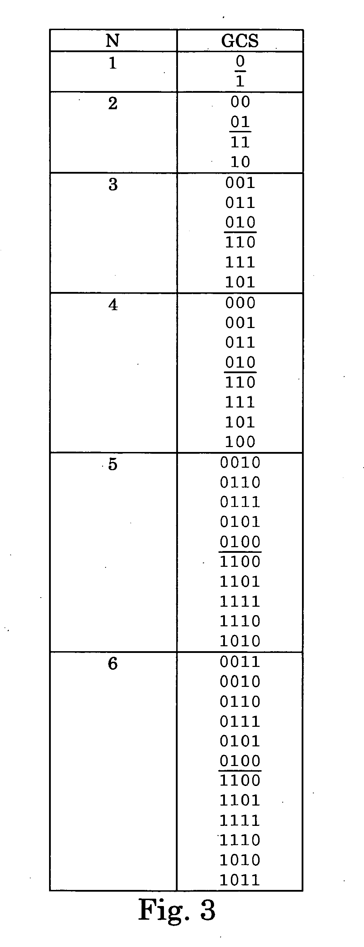

For a certain number of FIFO memory lines not necessarily all available Gray-coded symbols will be required. For instance, for the encoding of N=3 FIFO memory lines only 6 (2*N) Gray-Coded symbols are necessary, while 8 (2³) Gray-coded symbols are available. In order to guarantee that only a single bit value changes in the case of "wrapping" from the last to the first Gray-coded symbol the central 2*N Gray coded symbols are selected. In that respect, figure 3 shows exemplary associations of Gray-coded symbols (GCS) to certain numbers of FIFO memory lines N.

Those of skill in the art will appreciate that other methods for obtaining such Gray-code symbols can be used to provide 2N symbols with correct "wrapping" from the last to first element while respecting the rule of having only one single bit change.

In that respect, throughout this description (and, more to the point, in the claims that follow) reference will be repeatedly made to counts/counters being reset to the value 0 when the count/counter "reaches the value 2*N". Those of skill in the art will promptly appreciate that the count/counter "reaching" the value 2*N will typically involve the count/counter switching directly from ((2*N)-1)) to 0, without the count/counter properly taking on the value 2*N.

A Gray-code counter, which provides the desired wrapping on these 2N symbols and that can be reset to an initial specific symbol is implemented and used in several instances of the FIFO memory control. It will be appreciated that Gray-code counters per se are well known in the art, which makes it unnecessary to provide a more detailed description herein, since any implementation of Gray-code counters will be generally satisfactory for the purposes of the arrangement described herein.

As indicated, the arrangement described herein has the primary aim of detecting the "FULL" and "EMPTY" conditions of FIFO memories by using a set of such Gray-code counters.

Instead of using N values to encode the current FIFO memory status, a total of 2*N values are used. In this way, the symbol at position J and the symbol at position (J+N) will represent the same memory location, but will be different symbols. This is important for detecting the FULL condition as will be explained in the following.

Generally, two Gray-code counters are used to initially hold the same value of one of the 2*N Gray-coded symbols. The first read Gray-code counter increments on each read operation, the second write Gray-code counter increments on each write operation.

The "EMPTY" condition can be obtained when the distance between the read counter and the write counter is equal to zero, in other words when the two counters hold the same value.

The "FULL" condition is obtained when the distance between the write counter and the read counter is equal to N (i.e. the FIFO memory contains N elements). In a preferred embodiment, in order to calculate the distance between the two wrapping Gray-code counters a comparison is performed between the value of one of the two counters respect to the value of the other counter increased by N. In this way, the fact that the two values are equal implies that the distance between the write and read counters was actually N and therefore the FIFO memory has to be considered as "FULL".

In one embodiment the value is encoded with a third Gray-code counter initialized to symbols at position (J+N) and incremented either on a read or a write operation.

In another embodiment the value can be derived from 1-hot encoding the Gray-coded symbols and then using a shift of N bit to derive from the 1-hot encoded value of the symbol at position J the 1-hot encoded value of the symbol at position (J+N). Those of skill in the art will appreciate that other methods, not described explicitly herein, will permit to derive the value of the symbol at distance N providing the same effect.

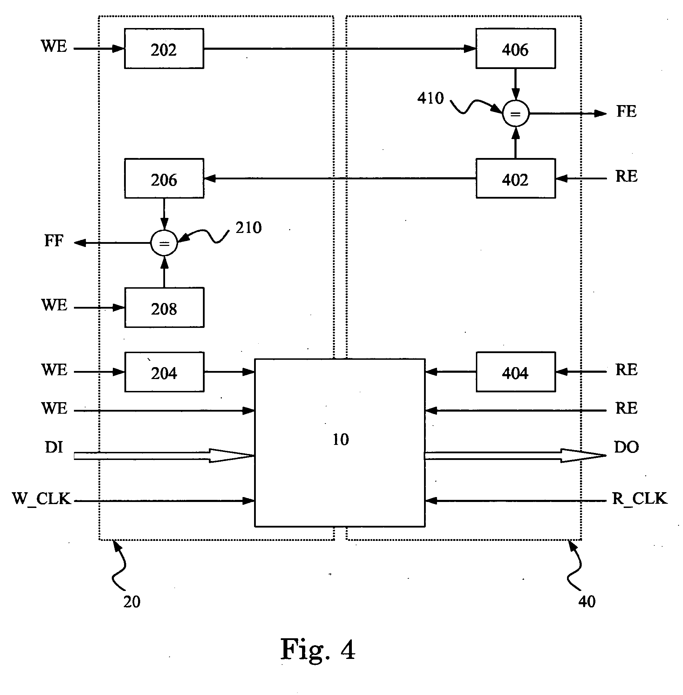

Figure 4 shows a block diagram of an example (not according to the invention) of a hard FIFO memory. As better detailed in the following, this embodiment includes a third shifted Gray-coded counter, which is incremented on each write operation.

In the example of figure 4 two clock domains are present. The write clock domain 20 is shown on the left hand side, and the read clock domain 40 is shown on the right hand side.

A dual port FIFO memory 10 is used to synchronize a data flow. To that end, incoming data on a data-in bus DI will be recorded in a FIFO memory location pointed by a write-address counter 204 when a write-enable signal WE is active on a write clock W CLK rising edge. Out-coming data on a data-out bus DO will reflect the value of the FIFO memory location pointed by the read-address counter 404.

Three counters are present in the write clock domain 20.

The write-address counter 204 is a simple binary counter, which counts from 0 to N-1 and then wraps again to zero each time the write-enable signal WE is active on a write clock W_CLK rising edge.

The second counter is a write Gray-code counter 202 and the last counter is a shifted write Gray-code counter 208. The write Gray-code counter 202 is initialized to the first Gray-coded symbol selected as Gray-code starting point (i.e. J), while the shifted write Gray-code counter 208 is initialized to the symbol at distance N (i.e. symbol at position J+N).

Both counters 202 and 208 are incremented each time a new value is written, i.e. each time the write-enable signal WE is active on a write clock W_CLK rising edge.

In the read clock domain 40 two counters are present. The read address counter 404 is a simple binary counter, which counts from 0 to N-1 and then wraps again to zero each time the read-enable signal RE is active on a read-clock R CLK rising edge.

The second counter is a read Gray-code counter 402 initialized to the first Gray-coded symbol selected as Gray-code starting point (i.e. symbol J). The counter will be incremented each time a new value is read, i.e. each time the read-enable signal RE is active on a read clock R_CLK rising edge.

In order to generate the "EMPTY" flag the write Gray-code counter 202 is synchronized through a synchronization logic 406 that can be implemented in manner known per se e.g. by using a cascade of two or more flip-flops depending on the read clock R CLK frequency and on the physical characteristic of the devices.

The synchronized value is then compared at 410 against the value of the read Gray-code counter 402. If the two values are equal then the "EMPTY" flag FE is asserted.

In order to generate the "FULL" flag FF the read Gray-code counter 402 is synchronized by using a synchronization logic 206. Typically, this is implemented using e.g. a cascade of two or more flip-flops depending on the write clock W CLK frequency and on the physical characteristic of the devices used.

The synchronized value is then compared at 210 against the value of the shifted write Gray-code counter.

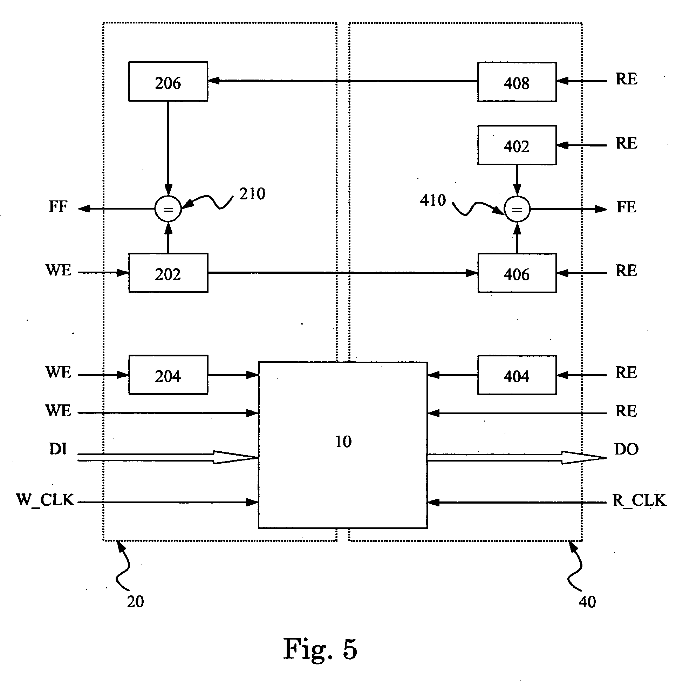

An alternative circuit for generating the FIFO "FULL" flag FF is shown in figure 5. In this example (not according to the invention) the shifted Gray-code counter 408 is placed in the read clock domain 40 and is incremented each time data is read from the FIFO, i.e. when the read enable signal RE is active on a read clock R_CLK rising edge.

In this case, the value of the shifted read Gray-code counter 408 is synchronized at 206 as explained in the foregoing and compared at 210 with the value of the write Gray-code counter 202. The "FULL" flag FE is asserted if the two values match.

Figure 5 shows an implementation of the shifter write Gray-code counter 208 of figure 4 wherein the shifted read Gray-code counter 408 is in the read clock domain 40.

It will be recalled that throughout the figures annexed and relating to different embodiments, the same references are used to indicate elements that are identical or equivalent: as a consequence, the description of these elements is not repeated for each embodiment.

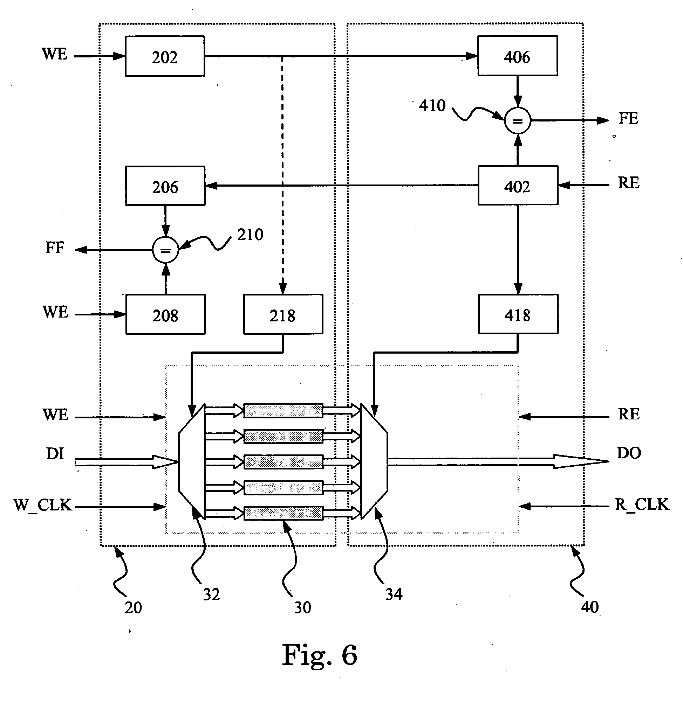

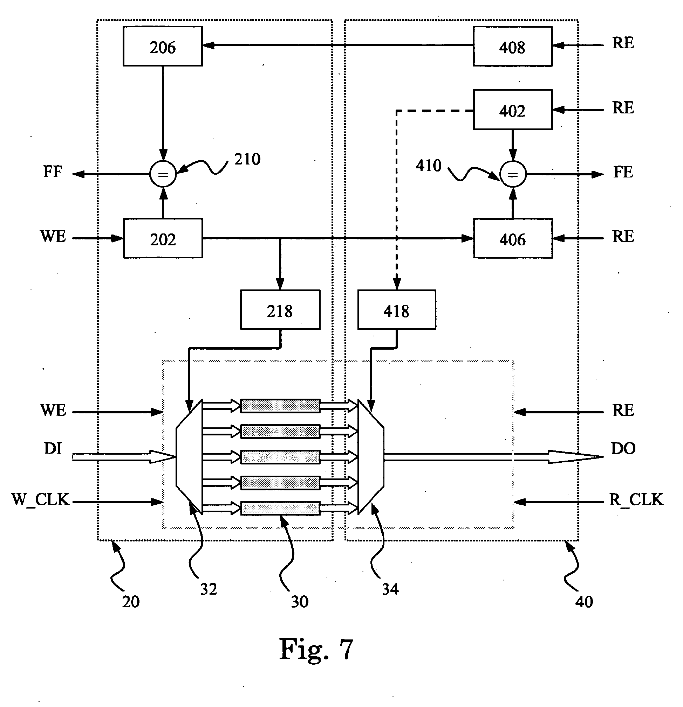

Figures 6 and 7 show alternative embodiments that are preferred for soft FIFO memories. In these implementations the hardware has been optimized by dispensing with the two binary counters 204, 404 used in the previous embodiments to address the FIFO memory location.

In figures 6 and 7, the read and write addresses are generated directly by decoding the read and write Gray-code counters 202, 402 by taking into account that symbols at position J and J+N will point to the same FIFO address location.

This solution is preferred for small FIFO memories as it may increase the number of symbols to be decoded and thus become more complex than an embodiment with two independent read and write address counters 204, 404.

Specifically, in figures 6 and 7, a set of registers 30 driven by the write clock W_CLK plays the role of the FIFO memory 10.

In these embodiments, the write and read address pointers are Gray-coded, and they are preferably converted into binary signals. This can be achieved e.g. by using two Gray-code decoders.

A first Gray-code decoder 218 is used to decode the value of the write Gray-code counter 202 into the write address of the soft FIFO memory. Accordingly the second Gray-code decoder 418 is used to decode the value of the read Gray-code counter 402 into the read address of the soft FIFO memory.

In order to decode the write address into the memory location of a write operation, an address decoder 32 is used. This address decoder preferably lies in the write clock domain 20 and can be realized e.g. by a simple demultiplexer.

In order to decode the read-address into the memory location of a read operation, a second address decoder 34 is used. This address decoder preferably lies in the read clock domain 40 and can be realized e.g. by a simple multiplexer.

Those of skill in the art will appreciate that this Gray-code decoder 218, 418 and the address decoder 32, 34 may take the form of a single decoder, which decodes the respective Gray-coded values directly into the related memory locations.

In the embodiment of figure 6, the "FULL" status of the FIFO memory is generated by comparing at 210 the value of the shifted write Gray-code counter 208 with the value of a synchronizer 206 that reads the contents of the Gray-code counter 402.

Figure 7 shows an alternative embodiment where the "FULL" status of the FIFO memory is generated by comparing at 210 the value of the write Gray-code counter 202 with the value of the synchronizer 206, i.e. the shifted read Gray-code counter 408.

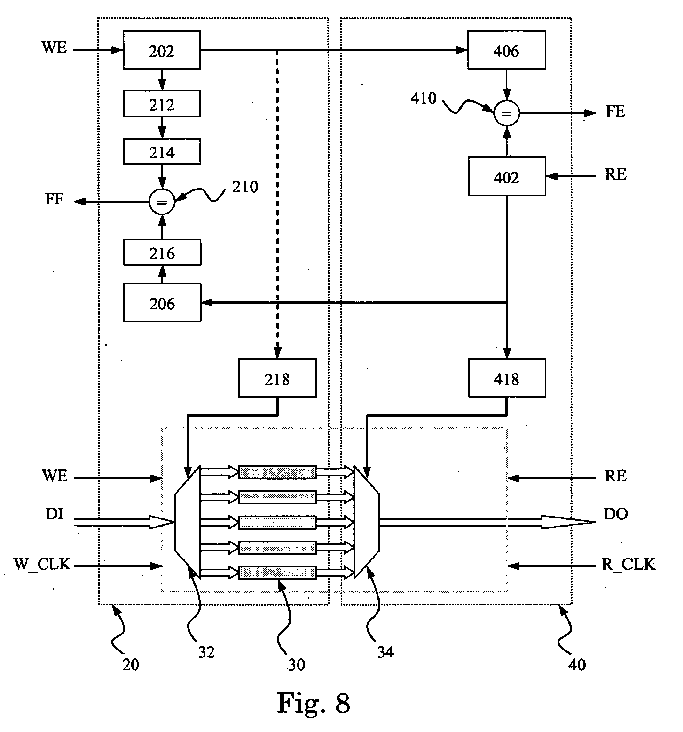

A further possible embodiment is shown in figure 8. In this case, the third Gray-code counter 208, 408 used to detect the "FULL" status of the FIFO memory has been removed and the symbol at distance N is obtained by using a 1-hot encoder 212 and a shifter 214.

The 2*N Gray-coded symbols are encoded with the 1-hot encoding technique.

The first Gray-coded symbol of the given set of 2*N symbols will be mapped to the 2*N bit vector having the bit at position 0 set to '1'.

The subsequent Gray-coded symbols will be mapped to the vectors obtained by shifting to the left by one bit the previous 1-hot encoded vector.

Accordingly, the 1-hot encoded value of a Gray-coded symbol at distance N from a given Gray-coded symbol can be detected by shifting the 1-hot encoded value of the given Gray-coded symbol by N bit to the left.

With these premises, the "FULL" flag of the FIFO memory can be obtained by comparing at 210 the 1-hot encoded 212 value of the write Gray-code counter 202 shifted by N bit to the left 214 with the 1-hot encoded 216 value of the synchronizer 206 representative of the value of the read Gray-code counter 402.

Those of skill in the art will appreciate that this type of control can be applied also in the read-clock domain 40 following the same principles of the previous described alternative embodiments.

Of course, without prejudice to the underlying principles of the invention, the details and the embodiments may vary, even significantly, with respect to what has been described and illustrated, just by way of example, without departing from the scope of the invention as defined in the annexed claims.

## Claims

1. A method of detecting the status of a FIFO memory (10, 30) during write/read operations, said FIFO memory (10, 30) having N memory locations, the method including the steps of:
- providing a first (202) and a second (402) Gray-code counts,
- initializing said first (202) and second (402) Gray-code counts to a value J,
- incrementing said first Gray-code count (202) on each said write operation,
- incrementing said second Gray-code count (402) on each said read operation,
- monitoring (210, 410) the distance of the value of said first count (202) to the value of said second count (402), and
- detecting (210) the full status of said FIFO memory (10, 30) if said distance of the value of said first count (202) to the value of said second count (402) is equal to N,
**characterized in that** each of said first (202) and said second (402) Gray-code counts is configured to take values out of 2*N possible values, and wherein the method includes the steps of:
- setting said first count (202) to the value 0 if the value of said first count (202) reaches 2*N,
- setting said second count (402) to the value 0 if the value of said second counter (402) reaches 2*N,
- determining (218, 32) a write address for said write operation to said FIFO memory (10, 30) from said value of said first Gray-code count (204), and
- determining (418, 34) a read address for said read operation from said FIFO memory (10, 30) from said value of said second Gray-code count (402).

2. The method of Claim 1, **characterized in that** it includes the step of detecting (410) the empty status of said FIFO memory (10,30) if said distance between the values of said first counter (202) to the value of said second counter (402) is equal to 0.

3. The method of either of Claims 1 or 2, **characterized in that** it includes the steps of:
- providing a third (208) Gray-code count configured to take values out of 2*N possible values,
- initializing said third Gray-code count (208) to the value N+J,
- incrementing said third Gray-code count (208) on each said write operation, and setting the content of said third count (208) to the value 0 if the value of said third count (208) reaches 2*N, and
- monitoring (210) the distance of the value of said third count (208) to the value of said second count (402), and
- detecting (210) the full status of said FIFO memory (10, 30) if said distance between the value of said third count (208) to the value of said second count (402) is equal to 0.

4. The method of either of Claims 1 or 2, **characterized in that** it includes the steps of:
- providing a third (408) Gray-code count configured to take values out of 2*N possible values,
- initializing said third Gray-code count (408) to the value N+J,
- incrementing said third Gray-code count (408) on each said read operation, and setting the content of said third count (408) to the value 0 if the value of said third count (408) reaches 2*N, and
- monitoring (210) the distance of the value of said first count (202) to the value of said third count (408), and
- detecting (210) the full status of said FIFO memory (10, 30) if said distance between the value of said first count (202) to the value of said third count (408) is equal to 0.

5. The method of either of Claims 1 or 2, **characterized in that** it includes the steps of:
- 1-hot encoding (212, 216) said first Gray-code count (202) and said second Gray-code count (402),
- shifting (214) to the left by N-bit said 1-hot encoded (212) value of said first Gray-code count (402),
- monitoring (210) the difference between said encoded (212) and sifted (214) value of said first count (202) and said encoded (216) value of said second count (408), and
- detecting (210) the full status of said FIFO memory (10, 30) if said encoded (212) and sifted (214) value of said first count (202) and said encoded (216) value of said second count (408) are equal.

6. The method of any of the previous claims including the step of:
- synchronizing (206, 406) at least one of said first (202), second (402) or third (208, 408) Gray-code count.

7. A system for detecting the status of a FIFO memory (10, 30) during write/read operations, said FIFO memory (10, 30) having N memory locations, the system including:
- a first (202) and a second (402) Gray-code counter, wherein said first (202) and second (402) Gray-code counters are configured to be initialized to a value J, and incremented on each said write operation and each said read operation, respectively,
- a comparator block (210) for monitoring the distance of the value of said first counter (202) to the value of said second counter (402) and detecting the full status of said FIFO memory (10, 30) if said distance of the value of said first counter (202) to the value of said second counter (402) is equal to N,
**characterized in that** each of said first (202) and said second (402) Gray-code counter is configured to take values out of 2*N possible values, wherein each of said first (202) and second (402) Gray-code counters are configured to be set to the value 0 if their count values reach 2*N, and wherein the system includes:
- a first converter block (32, 218) for converting said value of said first Gray-code counter (202) into the write address for said write operation to said FIFO memory (10,30), and
- a second converter block (32, 418) for converting said value of said second binary counter (404) into the read address for said read operation from said FIFO memory (10,30).

8. The system of claim 7, **characterized in that** said it includes a comparator block (410) for monitoring the distance of the value of said first counter (202) to the value of said second counter (402) and detecting the empty status of said FIFO memory (10, 30) if said distance of the value of said first counter (202) to the value of said second counter (402) is equal to 0.

9. The system of either of Claims 7 or 8, **characterized in that** it includes:
- a third (208) Gray-code counter configured to take values out of 2*N possible values, wherein said third (208) Gray-code counter is configured to be initialized to a value J+N, and incremented on each said write operation, and wherein said third (208) Gray-code counter is configured to be set to the value 0 if its count value reaches 2*N,
- a comparator block (210) for monitoring the distance of the value of said third counter (208) to the value of said second counter (402) and detecting the full status of said FIFO memory (10, 30) if said distance of the value of said third counter (208) to the value of said second counter (402) is equal to 0.

10. The system of either of Claims 7 or 8, **characterized in that** it includes:
- a third (408) Gray-code counter configured to take values out of 2*N possible values, wherein said third (408) Gray-code counter is configured to be initialized to a value J+N, and incremented on each said read operation, and wherein said third (408) Gray-code counter is configured to be set to the value 0 if its count value reaches 2*N,
- a comparator block (210) for monitoring the distance of the value of said first counter (202) to the value of said third counter (408) and detecting the full status of said FIFO memory (10, 30) if said distance of the value of said first counter (202) to the value of said second counter (408) is equal to 0.

11. The system of either of Claims 7 or 8, **characterized in that** it includes:
- a first (212) and a second (216) 1-hot encoder configured to encode the value of said first Gray-code counter (202) and said second Gray-code counter (402),
- a shifter (214) configured to shift by N-bit to the left said 1-hot encoded (212) value of said first Gray-code counter (402), and
- a comparator block (210) for monitoring the difference between said shifted (214) and encoded (212) value of said first counter (202) and said encoded (216) value of said second counter (408) and detecting the full status of said FIFO memory (10, 30) if said encoded (212) and sifted (214) value of said first count (202) and said encoded (216) value of said second count (408) are equal.

12. The system of any of claims 7 to 11 **characterized in that** it includes at least one synchronizer (206, 406) configured for synchronizing at least one of said first (202), second (402) or third (208, 408) Gray-code counter.

13. The system of any claims 7 to 12 in combination with said FIFO memory (10,30).

14. The combination of claim 13, **characterized in that** said FIFO memory (10,30) is a RAM memory.

15. The combination of claim 14, **characterized in that** said FIFO memory (10,30) is a dual port RAM memory.

16. The combination of claim 13, **characterized in that** said FIFO memory (10,30) is emulated by a write address decoder (32), a read address decoder (34), and a set of registers (30).

17. The use of the system of any of claims 7 to 13 for data synchronization between two clock domains (20, 40).

## Patentansprüche

1. Verfahren zum Detektieren des Status eines FIFO-Speichers (10, 30) während Schreib/Lese-Operationen, wobei der FIFO-Speicher (10, 30) N Speicherstellen aufweist, wobei das Verfahren folgende Schritte beinhaltet:
- Vorsehen eines ersten (202) sowie eines zweiten (402) Gray-Code-Zählwertes,
- Initialisieren des ersten (202) sowie des zweiten (402) Gray-Code-Zählwertes auf einen Wert J,
- Inkrementieren des ersten Gray-Code-Zählwertes (202) bei jeder Schreiboperation,
- Inkrementieren des zweiten Gray-Code-Zählwertes (402) bei jeder Leseoperation,
- Überwachen (210, 410) der Distanz des Wertes des ersten Zählwertes (202) zu dem Wert des zweiten Zählwertes (402), und
- Detektieren (210) des Gesamtstatus des FIFO-Speichers (10, 30), wenn die Distanz des Wertes des ersten Zählwertes (202) zu dem Wert des zweiten Zählwertes (402) gleich N ist,
**dadurch gekennzeichnet, dass** sowohl der erste (202) als auch der zweite (402) Gray-Code-Zählwert konfiguriert ist, Werte aus 2*N möglichen Werten anzunehmen, und wobei das Verfahren folgende Schritte aufweist:
- Setzen des ersten Zählwertes (202) auf den Wert 0, wenn der Wert des ersten Zählwertes (202) 2*N erreicht,
- Setzen des zweiten Zählwertes (402) auf den Wert 0, wenn der Wert des zweiten Zählwertes (402) 2*N erreicht,
- Bestimmen (218, 32) einer Schreibadresse für die Schreiboperation in den FIFO-Speicher (10, 30) aus dem Wert des ersten Gray-Code-Zählwertes (204), und
- Bestimmen (418, 34) einer Leseadresse für die Leseoperation von dem FIFO-Speicher (10,30) aus dem Wert des zweiten Gray-Code-Zählwertes (402).

2. Verfahren nach Anspruch 1, **dadurch gekennzeichnet, dass** es den Schritt des Detektierens (410) des Leerzustandes des FIFO-Speichers (10, 30) enthält, wenn die Distanz zwischen dem Wert des ersten Zählwertes (202) und dem Wert des zweiten Zählwertes (402) gleich 0 ist.

3. Verfahren entweder nach Anspruch 1 oder nach Anspruch 2, **dadurch gekennzeichnet, dass** es folgende Schritte umfasst:
- Vorsehen eines dritten (208) Gray-Code-Zählwertes, der konfiguriert ist, so dass er Werte aus 2*N möglichen Werten annimmt,
- Initialisieren des dritten Gray-Code-Zählwertes (208) auf den Wert N+J,
- Inkrementieren des dritten Gray-Code-Zählwertes (208) bei jeder Schreiboperation und Setzen des Inhaltes des dritten Zählwertes (208) auf den Wert 0, wenn der Wert des dritten Zählwertes (208) 2*N erreicht, und
- Überwachen (210) der Distanz zwischen dem Wert des dritten Zählwertes (208) und dem Wert des zweiten Zählwertes (402), und
- Detektieren des Gesamtstatus des FIFO-Speichers (10, 30), wenn die Distanz zwischen dem Wert des dritten Zählwertes (208) und dem Wert des zweiten Zählwertes (402) gleich 0 ist.

4. Verfahren entweder nach Anspruch 1 oder 2, **dadurch gekennzeichnet, dass** es folgende Schritte umfasst:
- Vorsehen eines dritten (408) Gray-Code-Zählwertes, der konfiguriert ist, so dass er Werte aus 2*N möglichen Werten annimmt,
- Initialisieren des dritten Gray-Code-Zählwertes (408) auf den Wert N+J,
- Inkrementieren des dritten Gray-Code-Zählwertes (408) bei jeder Leseoperation und Setzen des Inhaltes des dritten Zählwertes (408) auf den Wert 0, wenn der Wert des dritten Zählwertes (408) 2*N erreicht, und
- Überwachen (210) der Distanz des Wertes des ersten Zählwertes (202) zu dem Wert des dritten Zählwertes (408), und
- Detektieren (210) des Gesamtzustandes des FIFO-Speichers (10, 30), wenn die Distanz zwischen dem Wert des ersten Zählwertes (202) und dem Wert des dritten Zählwertes (408) gleich 0 ist.

5. Verfahren entweder nach Anspruch 1 oder 2, **dadurch gekennzeichnet, dass** es folgende Schritte umfasst:
- 1-Hot-Kodierung (212, 216) des ersten Gray-Code-Zählwertes (202) sowie des zweiten Gray-Code-Zählwertes (402),
- Linksverschiebung (214) des 1-Hot-kodierten (212) Wertes des ersten Gray-Code-Zählwertes (402) um N Bit,
- Überwachen (210) der Differenz zwischen dem kodierten (212) und verschobenen (214) Wert des ersten Zählwertes (202) und dem kodierten (216) Wert des zweiten Zählwertes (408), und
- Detektieren (210) des Gesamtzustandes des FIFO-Speichers (10, 30), wenn der kodierte (212) und verschobene (214) Wert des ersten Zählwertes (202) und der kodierte (216) Wert des zweiten Zählwertes (408) gleich sind.

6. Verfahren nach irgendeinem der vorstehenden Ansprüche, umfassend folgenden Schritt:
- Synchronisieren (206, 406) von mindestens einem Gray-Code-Zählwert von dem ersten (202), zweiten (402) oder dritten (208, 408) Gray-Code-Zählwert.

7. System zum Detektieren des Zustandes eines FIFO-Speichers (10, 30) während Schreib/Lese-Operationen, wobei der FIFO-Speicher (10, 30) N Speicherstellen aufweist, wobei das System umfasst:
- einen ersten (202) sowie einen zweiten (402) Gray-Code-Zähler, wobei der erste (202) und der zweite (402) Gray-Code-Zähler konfiguriert sind, auf einen Wert J initialisiert und bei jeder Schreiboperation bzw. jeder Leseoperation inkrementiert zu werden,
- einen Komparatorblock (210) zum Überwachen der Distanz des Wertes des ersten Zählers (202) zu dem Wert des zweiten Zählers (402) und zum Detektieren des Gesamtzustandes des FIFO-Speichers (10, 30), wenn die Distanz des Wertes des ersten Zählers (202) zu dem Wert des zweiten Zählers (402) gleich N ist,
**dadurch gekennzeichnet, dass** sowohl der erste (202) als auch der zweite (402) Gray-Code-Zähler konfiguriert ist, Werte aus 2*N möglichen Werten anzunehmen, wobei sowohl der erste (202) als auch der zweite (402) Gray-Code-Zähler konfiguriert ist, auf den Wert 0 gesetzt zu werden, wenn sein Zählwert 2*N erreicht, und wobei das System beinhaltet:
- einen ersten Konverterblock (32, 218) zum Konvertieren des Wertes des ersten Gray-Code-Zählers (202) in die Schreibadresse für die Schreiboperation in den FIFO-Speicher (10, 30), und
- einen zweiten Konverterblock (32, 418) zum Konvertieren des Wertes des zweiten Binärzählers (404) in die Leseadresse für die Leseoperation aus dem FIFO-Speicher (10, 30).

8. System nach Anspruch 7, **dadurch gekennzeichnet, dass** es einen Komparatorblock (410) zum Überwachen der Distanz des Wertes des ersten Zählers (202) zu dem Wert des zweiten Zählers (402) und zum Detektieren des LeerZustandes des FIFO-Speichers (10, 30) enthält, wenn die Distanz des Wertes des ersten Zählers (202) zu dem Wert des zweiten Zählers (402) gleich 0 ist.

9. System entweder nach Anspruch 7 oder nach Anspruch 8, **dadurch gekennzeichnet, dass** es beinhaltet:
- einen dritten (208) Gray-Code-Zähler, der konfiguriert ist, Werte aus 2*N möglichen Werten anzunehmen, wobei der dritte (208) Gray-Code-Zähler konfiguriert ist, auf den Wert J+N initialisiert und bei jeder der Schreiboperationen inkrementiert zu werden, und wobei der dritte (208) Gray-Code-Zähler konfiguriert ist, auf den Wert 0 gesetzt zu werden, wenn sein Zählwert 2*N erreicht,
- einen Komparatorblock (210) zum Überwachen der Distanz des Wertes des dritten Zählers (208) zu dem Wert des zweiten Zählers (402) und zum Detektieren des Gesamtzustandes des FIFO-Speichers (10, 30), wenn die Distanz des Wertes des dritten Zählers (208) zu dem Wert des zweiten Zählers (402) gleich 0 ist.

10. System entweder nach Anspruch 7 oder nach Anspruch 8, **dadurch gekennzeichnet, dass** es umfasst:
- einen dritten (408) Gray-Code-Zähler, der konfiguriert ist, Werte aus 2*N möglichen Werten anzunehmen, wobei der dritte (408) Gray-Code-Zähler konfiguriert ist, auf einen Wert J+N initialisiert und bei jeder Leseoperation inkrementiert zu werden, und wobei der dritte (408) Gray-Code-Zähler konfiguriert ist, auf den Wert 0 gesetzt zu werden, wenn sein Zählwert 2*N erreicht,
- einen Komparatorblock (210) zum Überwachen der Distanz des Wertes des ersten Zählers (202) zu dem Wert des dritten Zählers (408) und zum Detektieren des Gesamtzustandes FIFO-Speichers (10, 30), wenn die Distanz des Wertes des ersten Zählers (202) zu dem Wert des zweiten Zählers (408) gleich 0 ist.

11. System entweder nach Anspruch 7 oder nach Anspruch 8, **dadurch gekennzeichnet, dass** es aufweist:
- einen ersten (212) und einen zweiten (216) 1-Hot-Kopierer, der konfiguriert ist, den Wert des ersten Gray-Code-Zählers (202) und des zweiten Gray-Code-Zählers (402) zu kodieren,
- einen Verschieber (214), der konfiguriert ist, den 1-Hot-kodierten (212) Wert des ersten Gray-Code-Zählers (402) um N Bit nach links zu verschieben, und
- einen Komparatorblock (210) zum Überwachen der Differenz zwischen dem verschobenen (214) und kodierten (212) Wert des ersten Zählers (202) und dem kodierten (216) Wert des zweiten Zählers (408) und zum Detektieren des Gesamtzustandes des FIFO-Speichers (10, 30), wenn der kodierte (212) und verschobene (214) Wert des ersten Zählers (202) und der kodierte (216) Wert des zweiten Zählers (408) gleich sind.

12. System nach irgendeinem der Ansprüche 7 bis 11, **dadurch gekennzeichnet, dass** es mindestens einen Synchronisierer (206, 406) umfasst, der zum Synchronisieren mindestens eines Gray-Code-Zählers von dem ersten (202), zweiten (402) oder dritten (208, 408) Gray-Code-Zählers konfiguriert ist.

13. System nach irgendeinem der Ansprüche 7 bis 12 in Kombination mit dem FIFO-Speicher (10, 30).

14. Kombination von Anspruch 13, **dadurch gekennzeichnet, dass** der FIFO-Speicher (10, 30) ein RAM-Speicher ist.

15. Kombination aus Anspruch 14, **dadurch gekennzeichnet, dass** der FIFO-Speicher (10, 30) ein Dual-Port-RAM-Speicher ist.

16. Kombination nach Anspruch 13, **dadurch gekennzeichnet, dass** der FIFO-Speicher (10, 30) durch einen Schreibadressdekodierer (32), einen Leseadressdekodierer (34), und einen Satz von Registern (30) emuliert wird.

17. Verwendung des Systems nach irgendeinem der Ansprüche 7 bis 13 zur Datensynchronisation zwischen zwei Taktdomänen (20, 40).

## Revendications

1. Procédé destiné à détecter l'état d'une mémoire de type FIFO, premier entré, premier sorti (10, 30) au cours d'opérations de lecture / écriture, ladite mémoire de type FIFO (10, 30) présentant N emplacements de mémoire, le procédé comportant les étapes ci-après consistant à :
- délivrer des premier (202) et deuxième (402) compteurs en codes binaires réfléchis ;
- initialiser lesdits premier (202) et deuxième (402) compteurs en codes binaires réfléchis sur une valeur J ;
- incrémenter ledit premier compteur en codes binaires réfléchis (202) sur chaque dite opération d'écriture ;
- incrémenter ledit deuxième compteur en codes binaires réfléchis (402) sur chaque dite opération de lecture ;
- surveiller (210, 410) l'écart entre la valeur dudit premier compteur (202) et la valeur dudit deuxième compteur (402) ; et
- détecter (210) l'état plein de ladite mémoire de type premier entré, premier sorti (10, 30) lorsque ledit écart entre la valeur dudit premier compteur (202) et la valeur dudit deuxième compteur (402) est égal à N ;
**caractérisé en ce que** chacun desdits premier (202) et deuxième (402) compteurs en codes binaires réfléchis est configuré de manière à prélever des valeurs parmi 2 * N valeurs possibles, et dans lequel le procédé comporte les étapes ci-dessous consistant à :
- définir ledit premier compteur (202) sur la valeur 0 lorsque la valeur dudit premier compteur (202) atteint 2 * N ;
- définir ledit deuxième compteur (402) sur la valeur 0 lorsque la valeur dudit deuxième compteur (402) atteint 2 * N ;
- déterminer (218, 32) une adresse d'écriture pour ladite opération d'écriture sur ladite mémoire de type premier entré, premier sorti (10, 30) à partir de ladite valeur dudit premier compteur en codes binaires réfléchis (204) ; et
- déterminer (418, 34) une adresse de lecture pour ladite opération de lecture de ladite mémoire de type premier entré, premier sorti (10, 30) à partir de ladite valeur dudit deuxième compteur en codes binaires réfléchis (402).

2. Procédé selon la revendication 1, **caractérisé en ce qu'**il comporte l'étape consistant à détecter (410) l'état vide de ladite mémoire de type premier entré, premier sorti (10, 30) lorsque ledit écart entre les valeurs dudit premier compteur (202) et la valeur dudit deuxième compteur (402) est égal à 0.

3. Procédé selon l'une quelconque des revendications 1 ou 2, **caractérisé en ce qu'**il comporte les étapes ci-dessous consistant à :
- délivrer un troisième (208) compteur en codes binaires réfléchis configuré de manière à prélever des valeurs parmi 2 * N valeurs possibles ;
- initialiser ledit troisième compteur en codes binaires réfléchis (208) sur la valeur N + J ;
- incrémenter ledit troisième compteur en codes binaires réfléchis (208) sur chaque dite opération d'écriture, et définir le contenu dudit troisième compteur (208) sur la valeur 0 lorsque la valeur dudit troisième compteur (208) atteint 2 * N ; et
- surveiller (210) l'écart entre la valeur dudit troisième compteur (208) et la valeur dudit deuxième compteur (402) ; et
- détecter (210) l'état plein de ladite mémoire de type premier entré, premier sorti (10, 30) lorsque ledit écart entre la valeur dudit troisième compteur (208) et la valeur dudit deuxième compteur (402) est égal à 0.

4. Procédé selon l'une quelconque des revendications 1 ou 2, **caractérisé en ce qu'**il comporte les étapes ci-dessous consistant à :
- délivrer un troisième (408) compteur en codes binaires réfléchis configuré de manière à prélever des valeurs parmi 2 * N valeurs possibles ;
- initialiser ledit troisième compteur en codes binaires réfléchis (408) sur la valeur N + J ;
- incrémenter ledit troisième compteur en codes binaires réfléchis (408) sur chaque dite opération de lecture, et définir le contenu dudit troisième compteur (408) sur la valeur 0 lorsque la valeur dudit troisième compteur (408) atteint 2 * N ; et
- surveiller (210) l'écart entre la valeur dudit premier compteur (202) et la valeur dudit troisième compteur (408) ; et
- détecter (210) l'état plein de ladite mémoire de type premier entré, premier sorti (10, 30) lorsque ledit écart entre la valeur dudit premier compteur (202) et la valeur dudit troisième compteur (408) est égal à 0.

5. Procédé selon l'une quelconque des revendications 1 ou 2, **caractérisé en ce qu'**il comporte les étapes ci-dessous consistant à :
- coder par un codage à chaud de niveau 1 (212, 216) ledit premier compteur en codes binaires réfléchis (202) et ledit deuxième compteur en codes binaires réfléchis (402) ;
- décaler (214) vers la gauche de N bits ladite valeur codée par un codage à chaud de niveau 1 (212) dudit premier compteur en codes binaires réfléchis (402) ;
- surveiller (210) la différence entre ladite valeur décodée (212) et décalée (214) dudit premier compteur (202) et ladite valeur décodée (216) dudit deuxième compteur (408) ; et
- détecter (210) l'état plein de ladite mémoire de type premier entré, premier sorti (10, 30) lorsque ladite valeur décodée (212) et décalée (214) dudit premier compteur (202) et ladite valeur décodée (216) dudit deuxième compteur (408) sont égales.

6. Procédé selon l'une quelconque des revendications précédentes comportant l'étape consistant à :
- synchroniser (206, 406) au moins l'un desdits premier (202), deuxième (402) ou troisième (208, 408) compteurs en codes binaires réfléchis.

7. Système destiné à détecter l'état d'une mémoire de type FIFO, premier entré, premier sorti (10, 30) au cours d'opérations de lecture / écriture, ladite mémoire de type premier entré, premier sorti (10, 30) présentant N emplacements de mémoire, le système comportant :
- un premier (202) et un deuxième (402) compteur en codes binaires réfléchis, dans lequel lesdits premier (202) et deuxième (402) compteurs en codes binaires réfléchis sont configurés de manière à être initialisés sur une valeur J, et incrémenté à chaque dite opération d'écriture et chaque dite opération de lecture, respectivement ;
- un bloc comparateur (210) pour surveiller l'écart entre la valeur dudit premier compteur (202) et la valeur dudit deuxième compteur (402) et détecter l'état plein de ladite mémoire de type premier entré, premier sorti (10, 30) lorsque ledit écart entre la valeur dudit premier compteur (202) et la valeur dudit deuxième compteur (402) est égal à N ;
**caractérisé en ce que** chacun desdits premier (202) et deuxième (402) compteurs en codes binaires réfléchis est configuré de manière à prélever des valeurs parmi 2 * N valeurs possibles, où chacun desdits premier (202) et deuxième (402) compteurs en codes binaires réfléchis est configuré de manière à être défini sur la valeur 0 lorsque ses valeurs de compteur atteignent 2 * N, et dans lequel le système comporte :
- un premier bloc convertisseur (32, 218) pour convertir ladite valeur dudit premier compteur en codes binaires réfléchis (202) en l'adresse d'écriture pour ladite opération d'écriture sur ladite mémoire de type premier entré, premier sorti (10, 30) ; et
- un deuxième bloc convertisseur (32, 418) pour convertir ladite valeur dudit deuxième compteur binaire (404) en l'adresse de lecture pour ladite opération de lecture de ladite mémoire de type premier entré, premier sorti (10, 30).

8. Système selon la revendication 7, **caractérisé en ce qu'**il comporte un bloc comparateur (410) pour surveiller l'écart entre la valeur dudit premier compteur (202) et la valeur dudit deuxième compteur (402) et détecter l'état vide de ladite mémoire de type premier entré, premier sorti (10, 30) lorsque ledit écart entre la valeur dudit premier compteur (202) et la valeur dudit deuxième compteur (402) est égal à 0.

9. Système selon l'une quelconque des revendications 7 ou 8, **caractérisé en ce qu'**il comporte :
- un troisième (208) compteur en codes binaires réfléchis configuré de manière à prélever des valeurs parmi 2 * N valeurs possibles, dans lequel ledit troisième (208) compteur en codes binaires réfléchis est configuré de manière à être initialisé sur une valeur J + N, et incrémenté à chaque dite opération d'écriture, et dans lequel ledit troisième (208) compteur en codes binaires réfléchis est configuré de manière à être défini sur la valeur 0 lorsque sa valeur de compteur atteint 2 * N ;
- un bloc comparateur (210) pour surveiller l'écart entre la valeur dudit troisième compteur (208) et la valeur dudit deuxième compteur (402) et détecter l'état plein de ladite mémoire de type premier entré, premier sorti (10, 30) lorsque ledit écart entre la valeur dudit troisième compteur (208) et la valeur dudit deuxième compteur (402) est égal à 0.

10. Système selon l'une quelconque des revendications 7 ou 8, **caractérisé en ce qu'**il comporte :
- un troisième (408) compteur en codes binaires réfléchis configuré de manière à prélever des valeurs parmi 2 * N valeurs possibles, dans lequel ledit troisième (408) compteur en codes binaires réfléchis est configuré de manière à être initialisé sur une valeur J + N, et incrémenté à chaque dite opération de lecture, et dans lequel ledit troisième (408) compteur en codes binaires réfléchis est configuré de manière à être défini sur la valeur 0 lorsque sa valeur de compteur atteint 2 * N ;
- un bloc comparateur (210) pour surveiller l'écart entre la valeur dudit premier compteur (202) et la valeur dudit troisième compteur (408) et détecter l'état plein de ladite mémoire de type FIFO premier entré, premier sorti (10, 30) lorsque ledit écart entre la valeur dudit premier compteur (202) et la valeur dudit deuxième compteur (408) est égal à 0.

11. Système selon l'une quelconque des revendications 7 ou 8, **caractérisé en ce qu'**il comporte :
- un premier (212) et un deuxième (216) codeur à chaud de niveau 1 configurés de manière à coder la valeur dudit premier compteur en codes binaires réfléchis (202) et dudit deuxième compteur en codes binaires réfléchis (402) ;
- un module de décalage (214) configuré de manière à décaler de N bits vers la gauche ladite valeur codée par un codage à chaud de niveau 1 (212) dudit premier compteur en codes binaires réfléchis (402) ; et
- un bloc comparateur (210) pour surveiller la différence entre ladite valeur décalée (214) et codée (212) dudit premier compteur (202) et ladite valeur décodée (216) dudit deuxième compteur (408) et pour détecter l'état plein de ladite mémoire de type FIFO, premier entré, premier sorti (10, 30) lorsque ladite valeur décodée (212) et décalée (214) dudit premier compteur (202) et ladite valeur décodée (216) dudit deuxième compteur (408) sont égales.

12. Système selon l'une quelconque des revendications 7 à 11 **caractérisé en ce qu'**il comporte au moins un synchroniseur (206, 406) configuré de manière à synchroniser au moins l'un desdits premier (202), deuxième (402) ou troisième (208, 408) compteurs en codes binaires réfléchis.

13. Système selon l'une quelconque des revendications 7 à 12 associé à ladite mémoire de type FIFO, premier entré, premier sorti (10, 30).

14. Association selon la revendication 13, **caractérisée en ce que** ladite mémoire de type FIFO, premier entré, premier sorti (10, 30) est une mémoire RAM.

15. Association selon la revendication 14, **caractérisée en ce que** ladite mémoire de type premier entré, premier sorti (10, 30) est une mémoire RAM à deux ports.

16. Association selon la revendication 13, **caractérisé en ce que** ladite mémoire de type premier entré, premier sorti (10, 30) est émulée par un décodeur d'adresses d'écriture (32), un décodeur d'adresses de lecture (34), et un ensemble d'enregistreurs (30).

17. Utilisation du système selon l'une quelconque des revendications 7 à 13 pour une synchronisation de données entre deux domaines d'horloge (20, 40).
